# EUROPEAN PATENT APPLICATION

(11) **EP 4 541 310 A1**
(43) Date of publication of application: **23.04.2025**
(21) Application number: 23823270.6
(22) Date of filing: 16.06.2023
(51) Int. Cl.: A61C 9/00, A61C 7/00

(54) **METHOD AND APPARATUS FOR ACQUIRING TOOTH MODEL, DEVICE AND MEDIUM**

(30) Priority: 17.06.2022 CN 202210722394
(71) Applicant: Shining 3D Tech Co., Ltd., Hangzhou, Zhejiang 311258 (CN)
(72) Inventor: SUN, Bo, Hangzhou, Zhejiang 311258 (CN); ZHANG, Huiquan, Hangzhou, Zhejiang 311258 (CN); MA, Chao, Hangzhou, Zhejiang 311258 (CN); JIA, Yongjie, Hangzhou, Zhejiang 311258 (CN)
(74) Representative: Dehns Germany Partnerschaft mbB
(86) International application number: PCT/CN2023/100826
(87) International publication number: WO 2023/241704

(57) **Abstract**

Provided is a method for acquiring a tooth model, including: in response to an acquired current point cloud data frame of a tooth, generating and displaying a current tooth model according to a preset tracking registering algorithm and the current point cloud data frame; storing the current point cloud data frame into a preset database, and according to all point cloud data frames included in the preset database, determining whether a preset model updating condition is met; and in a case that the preset model updating condition is met, determining a reference tooth model according to all the point cloud data frames, and updating the current tooth model according to the reference tooth model.

## Description

The present disclosure claims priority to Chinese Patent Application No. 202210722394.6 filed to the China National Intellectual Property Administration on June 17, 2022 and entitled "Method and Apparatus for Acquiring Tooth Model, and Device and Medium", the disclosure of which is hereby incorporated by reference in its entirety.

### Technical Field

The present disclosure relates to the technical field of three-dimensional modeling, and in particular, to a method and apparatus for acquiring a tooth model, and a device and a medium.

### Background

As dental digitalization and chairside restoration techniques continue to mature and become more practical, the use of an intraoral scanner continues to increase, and more clinics use the intraoral scanner to scan and acquire a three-dimensional data model of the teeth in the oral cavity of a patient. Since intraoral scanning needs to put the intraoral scanner into the oral cavity of the patient for scanning and acquisition, a scanning head is generally small, and its image capture window is generally about 15 mm, three-dimensional data of the teeth of the entire oral cavity area cannot be directly acquired. The three-dimensional data of the teed at different areas in the oral cavity is acquired by moving and changing a position and orientation of the intraoral scanner, and through tracking registering during scanning and subsequent optimization, the three-dimensional data model of the consistent and complete teeth is obtained ultimately.

In the related art, during the scanning and moving of the intraoral scanner, in order to ensure that point cloud data frames of the teeth in a local area newly obtained through scanning can be effectively registered with point cloud data frames of the teeth in the scanned area, the intraoral scanner moves and scans the point cloud data frames of the teeth in the mouth, and uses a tracking registering technology to determine registering positions of the point cloud data frames of the teeth newly scanned. According to the registering positions, the point cloud data frame of the tooth currently scanned is registered to acquire a tooth model. According to the continuous registering method, as a moving distance (or a scanning area range) of the intraoral scanner increases, tracking registering errors accumulate, and scanning is performed on a scanning loop (the intraoral scanner starts scanning from one position, and the intraoral scanner is continuously moved to acquire three-dimensional data of a new area and is moved and scanned back to the start position, so as to form an end-to-end moving trajectory path) to continuously register the obtained point cloud data frames, so as to obtain a complete model of the teeth.

However, due to the presence of registering errors, for the method for tracking registering based on the local area, as the moving distance (or the scanning area range) of the intraoral scanner increases, the tracking registering errors accumulate, and the scanning loop cannot be closed due to layer misalignment in the three-dimensional data at a closure, that is, a loop error is generated. When the loop error is generated, the inconsistency of the data leads to incorrect or failed registering of subsequent scanning near the loop closure, such that effective scanning cannot be continued, causing the model of the teeth in the mouth to be unable to be acquired completely.

### Summary

In order to solve the above technical problem or at least partially solve the above technical problem, the present disclosure provides a method and apparatus for acquiring a tooth model, and a device and a medium. Therefore, the generation and display of the tooth model and the global optimization of the tooth model are performed in parallel, and the tooth model is updated at the appropriate time according to results after global optimization, such that the problem that the point cloud data frames of the teeth cannot be continuously acquired due to large errors of the tooth model to affect the acquisition completeness of the tooth model is avoided, and the completeness and accuracy of the acquired tooth model are realized on the basis of ensuring that the tooth model may be displayed in real time according to the point cloud data frames.

Embodiments of the present disclosure provide a method for acquiring a tooth model. The method includes: in response to an acquired current point cloud data frame of a tooth, generating and displaying a current tooth model according to a preset tracking registering algorithm and the current point cloud data frame; storing the current point cloud data frame into a preset database, and according to all point cloud data frames included in the preset database, determining whether a preset model updating condition is met; and in a case that the preset model updating condition is met, determining a reference tooth model according to all the point cloud data frames, and updating the current tooth model according to the reference tooth model.

The embodiments of the present disclosure further provide an apparatus for acquiring a tooth model. The apparatus includes: a display component, configured to, in response to an acquired current point cloud data frame of a tooth and according to a preset tracking registering algorithm and the current point cloud data frame, generate and display a current tooth model; an optimization component, configured to store the current point cloud data frame into a preset database, and according to all point cloud data frames comprised in the preset database, determine whether a preset model updating condition is met; and an updating component, configured to, when the preset model updating condition is met, determine a reference tooth model according to all the point cloud data frames, and update the current tooth model according to the reference tooth model.

The embodiments of the present disclosure further provide an electronic device. The electronic device includes: a processor; and a memory configured to store an instruction that is executable by the processor. The processor is configured to read the executable instruction from the memory, and execute the instruction to implement the method for acquiring a tooth model as provided in the embodiments of the present disclosure.

The embodiments of the present disclosure further provide a computer-readable storage medium. The storage medium stores a computer program. The computer program is configured to execute the method for acquiring a tooth model as provided in the embodiments of the present disclosure.

A fourth aspect further provides a computer storage medium. The computer storage medium may store a program. The program, when being executed, may implement part or all steps in each implementation of the communication method provided in the first aspect of the present disclosure.

The above technical solutions provided in the embodiments of the present disclosure have the following advantages compared with the related art.

According to the solution for acquiring a tooth model provided in the embodiments of the present disclosure, in response to the acquired current point cloud data frame of the tooth and according to the preset tracking registering algorithm and the current point cloud data frame, the current tooth model is generated and displayed; then, the current point cloud data frame is stored into the preset database, and according to all the point cloud data frames included in the preset database, whether the preset model updating condition is met is determined; and in a case that the preset model updating condition is met, the reference tooth model is determined according to all the point cloud data frames, and the current tooth model is updated according to the reference tooth model. Therefore, the generation and display of the tooth model and the global optimization of the tooth model are performed in parallel, and the tooth model is updated at the appropriate time according to results after global optimization, such that the problem that the point cloud data frames of the teeth cannot be continuously acquired due to large errors of the tooth model to affect the acquisition completeness of the tooth model is avoided, and the completeness and accuracy of the acquired tooth model are realized on the basis of ensuring that the tooth model may be displayed in real time according to the point cloud data frames.

It should be understood that, the above general description and the following detailed description are merely exemplary and explanatory, and cannot limit the present disclosure.

### Brief Description of the Drawings

Drawings are incorporated into the specification and constitute a part of the specification. The drawings illustrate embodiments in accordance with the present disclosure and serve to understand the principles of the present disclosure together with the specification.

In order to more clearly illustrate the embodiments of the present disclosure or the technical solutions in the prior art, the drawings used in the description of the embodiments or the prior art will be briefly described below. It is apparent that other drawings can be obtained from those skilled in the art according to these drawings without any creative work.
Fig. 1 is a schematic flowchart of a method for acquiring a tooth model according to embodiments of the present disclosure.
Fig. 2 is a schematic diagram of a scenario for acquiring a tooth model according to embodiments of the present disclosure.
Fig. 3 is a schematic flowchart of another method for acquiring a tooth model according to embodiments of the present disclosure.
Fig. 4 is a schematic flowchart of another method for acquiring a tooth model according to embodiments of the present disclosure.
Fig. 5 is a schematic structural diagram of an apparatus for acquiring a tooth model according to embodiments of the present disclosure.
Fig. 6 is a schematic structural diagram of an electronic device according to embodiments of the present disclosure.

### Detailed Description of the Embodiments

In order to make objectives, technical solutions, and advantages of embodiments of the present disclosure clearer, the technical solutions in the embodiments of the present disclosure will be clearly and completely described below. It is apparent that the described embodiments are only part of the embodiments of the present disclosure, not all the embodiments. Based on the embodiments in the present disclosure, all other embodiments obtained by those of ordinary skill in the art without creative work shall fall within the protection scope of the present disclosure.

In order to solve the above problem, embodiments of the present disclosure provide a method for acquiring a tooth model. The method is introduced with reference to specific embodiments.

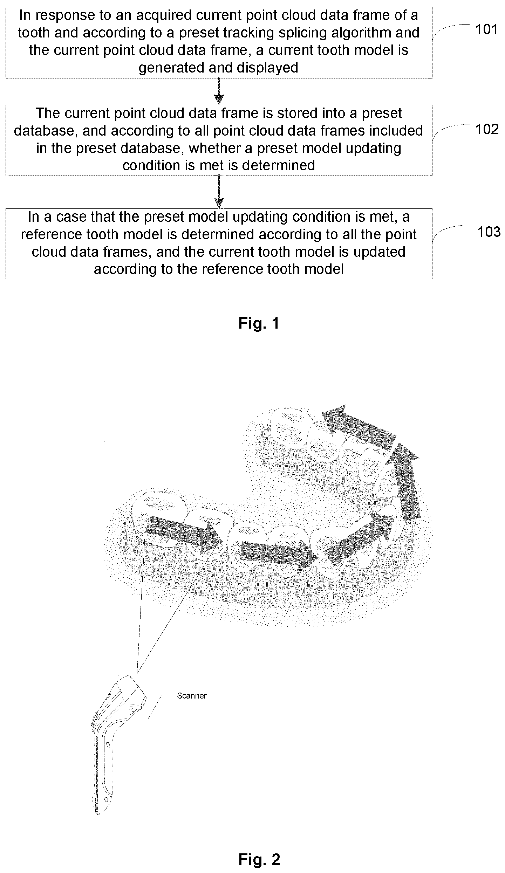

Fig. 1 is a schematic flowchart of a method for acquiring a tooth model according to embodiments of the present disclosure. The method may be executed by an apparatus for acquiring a tooth model. The apparatus may be implemented by using software and/or hardware, and may generally be integrated in an electronic device. As shown in Fig. 1, the method includes the following steps.

At S101, in response to an acquired current point cloud data frame of a tooth and according to a preset tracking registering algorithm and the current point cloud data frame, a current tooth model is generated and displayed.

It may be understood that, in the embodiments of the present disclosure, a scanning device such as an intraoral scanner may be used to move in an oral cavity of a user to acquire current point cloud data frame of a corresponding tooth in the oral cavity in a current acquisition period. The current point cloud data frame may be understood as a combination including three-dimensional data points of a plurality of scanning points on the teeth scanned at the same time.

As shown in Fig. 2, since a scanning window of the intraoral scanner is generally small, the intraoral scanner needs to be moved to continuously acquire the point cloud data frames in a plurality of acquisition periods. The point cloud data frames acquired in each acquisition period are the point cloud data frames of local teeth among all the teeth in the oral cavity, such that a complete model of the teeth can be acquired by registering the plurality of point cloud data frames.

In some embodiments, after the current point cloud data frame of the tooth is acquired, the current tooth model of the current acquisition period is determined according to the point cloud data frame.

In some embodiments of the present disclosure, when the current tooth model is constructed and acquired based on the point cloud data frame, the point cloud data frame in the point cloud data frame may be subjected to processes such as pre-processing, segmentation, triangulation, mesh rendering, and the like to obtain the corresponding current tooth model. The process of constructing and acquiring the current tooth model based on the point cloud data frame may be obtained through existing technologies (e.g., a fusion method based on an octree voxel field), and is not described herein again.

In some embodiments of the present disclosure, in a case that the current point cloud data frame is not the first point cloud data frame, that is, the tooth model has been previously constructed according to point cloud data frames acquired in historical acquisition periods, such that in some present embodiments, the current tooth model is acquired according to a tracking registering technology.

In some present embodiments, a target tooth model of the teeth in a previous acquisition period is acquired, and the current point cloud data frame is registered on the target tooth model to acquire an updated model as the current tooth model. In some present embodiments, the point cloud data frame in the current point cloud data frame may match the point cloud data frame on the target tooth model in the previous acquisition period, or match the point cloud data frame in the previous acquisition period, so as to determine an overlapping area of the current point cloud data frame and the point cloud data frame on the target tooth model in the previous acquisition period; a registering position of the current point cloud data frame is positioned based on the overlapping area; and the current point cloud data frame is registered on the target tooth model of the previous acquisition period based on the registering position, so as to obtain the current tooth model of the current period. When the current point cloud data frame is registered on the target tooth model of the previous acquisition period, an Iterative Closest Point (ICP) algorithm and the like may be used, which is not enumerated herein.

Further, after the current tooth model is obtained, and in order to display the scanned tooth model in real time, the current tooth model is displayed on a preset display interface. The preset display interface may be understood as an interactive interface that displays in real time the model obtained after tooth scanning.

At S102, the current point cloud data frame is stored into a preset database, and according to all point cloud data frames included in the preset database, whether a preset model updating condition is met is determined.

It is easily understood that, the current tooth model of the current acquisition period is obtained based on the registering technology, such that there may be a registering error. In a case that the registering errors gradually accumulate, the obtained tooth model may have a large error, and even the tooth model cannot be closed when scanning a circle back to a start position, such that in order to eliminate the accumulated errors, error optimization needs to be performed on related models. While the real-time global optimization-based algorithm is more time-consuming, in a case that the optimized tooth model is displayed until the global optimization-based algorithm is completed, it obviously leads to display delay, affecting the visual experience of the user and scanning efficiency, etc.

In some embodiments of the present disclosure, the current point cloud data frame is stored in the preset database, and without affecting the real-time displaying of the current tooth model, whether all the point cloud data frames stored in the preset database meet the preset model updating condition is determined in the form of background processing. For example, 2 parallel threads may be constructed in advance. The first thread is configured to determine the current tooth model of the current acquisition period according to the point cloud data frame, and display the current tooth model on the preset display interface; and the second thread is configured to store the current point cloud data frame to the preset database, and determine whether all the point cloud data frames of the teeth in the preset database are meet the preset model updating condition.

In some present embodiments, in order to reduce computing power consumption, it is not the case that global error optimization is performed for every acquired point cloud data frame, but to determine whether the preset model updating condition is met according to all the point cloud data frames of the teeth in the preset database, only after the preset model updating condition is met, the error in the current tooth model displayed on a front end may be considered to be large, and there is a possibility that the current tooth model may not be able to deviate from a real tooth due to the error, affecting a display effect, and even affecting scanning fluency and the closing of the tooth model.

It is to be noted that, in different application scenarios, the manner of determining whether the preset model updating condition is met according to all the point cloud data frames of the teeth in the preset database. Examples are as follows.

In some embodiments of the present disclosure, the number of current frames of all the point cloud data frames included in the preset database is counted, that is, the point cloud data frames acquired from the first acquisition are counted, and in a case that the number of current frames is greater than a preset number threshold, it is determined that the preset model updating condition is met. The preset number threshold may be calibrated based on experimental data.

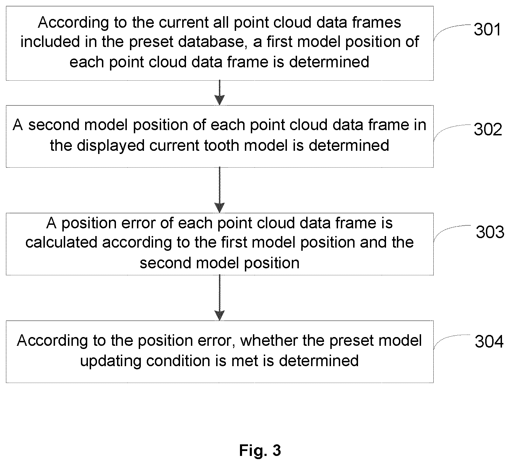

In some embodiments of the present disclosure, as shown in Fig. 3, according to all the point cloud data frames comprised in the preset database, determining whether the preset model updating condition is met includes the following steps.

At S301, according to the current all point cloud data frames included in the preset database, a first model position of each point cloud data frame is determined.

In some embodiments, according to the current all point cloud data frames included in the preset database, the first model position of each point cloud data frame is determined. The first model position is obtained by performing global error optimization according to all the current point cloud data frames, and thus is higher in accuracy compared to a registering position of the point cloud data frame in a tooth model obtained based on a tracking technology.
performing global error optimization according to all the current point cloud data frames may be implemented according to any one of global optimization algorithms in existing technology. In some alternative embodiments, the first model position of each point cloud data frame is determined based on a bundle method. The bundle method is an algorithm that puts the calculation of elements of exterior orientation (outside points) and model point coordinates (inside points) into a whole. Bundle adjustment is performed according to the principle of a least squares method after linearization by using a collinearity equation as a mathematical model, and using the registering position of each point cloud data frame in a three-dimensional space as a nonlinear function of an unknown number. The calculation is also to iterate over and over again on the basis of providing an approximate solution, so as to reach a registering position value of each point cloud data frame that converges to an optimal value, and use the registering position value as the first model position.

At S302, a second model position of each point cloud data frame in the displayed current tooth model is determined.

In some present embodiments, the second model position of each point cloud data frame in the displayed current tooth model is determined. The second model position is a coordinate position of the corresponding point cloud data frame in the current tooth model.

At S303, a position error of each point cloud data frame is calculated according to the first model position and the second model position.

Since a second reference tooth model is a model that is obtained by performing global optimization based on all the current point cloud data frames, the current tooth model is a model with coarse refinement obtained based on the tracking registering technology. Therefore, the position error of each point cloud data frame is calculated according to the first model position and the second model position, and based on the calculation of the position error, whether an error degree of the current tooth model is large and whether the tooth model cannot be closed due to a large accumulated error may be determined.

In some alternative embodiments, according to a mean value of a coordinate difference between key feature points in the first model position and the second model position, the mean value based on the coordinate difference is used as the position error of each point cloud data frame.

In some other alternative embodiments, the first model position and the second model position may be aligned according to a related alignment algorithm, optical flow information between the first model position and the second model position is calculated, and the position error is determined based on the optical flow information.

At S304, according to the position error, whether the preset model updating condition is met is determined.

In some present embodiments, after the position error is acquired, according to the position error, whether the preset model updating condition is met is determined. In some alternative embodiments, an error mean of all the position errors is calculated; and whether the error mean is greater than a preset average error threshold is determined, and in a case that the error mean is greater than the preset average error threshold, it is determined that the preset model updating condition is met.

In some other alternative embodiments, a maximum position error among all the position errors is determined; and whether the maximum position error is greater than a preset maximum error threshold is determined, and in a case that the maximum position error is greater than the maximum error threshold, it is determined that the preset model updating condition is met.

At S103, in a case that the preset model updating condition is met, a reference tooth model is determined according to all the point cloud data frames, and the current tooth model is updated according to the reference tooth model.

In some present embodiments, in a case that the preset model updating condition is met, the reference tooth model is determined according to all the point cloud data frames, and the current tooth model is updated according to the reference tooth model. In a case that the current reference tooth model is not generated on a back end for the first time, the current reference tooth model may be determined according to all the point cloud data frames on the basis of the previous reference tooth model.

It may be understood that, in the embodiments of the present disclosure, in a case that the preset model updating condition is met, that is, when the error in the displayed current tooth model is large, in order to guarantee the display effect and avoid the problem that the tooth model displayed on the front end may not be closed due to the large accumulated error, the displayed current tooth model is updated in view of the reference tooth model with higher accuracy that is obtained by all the point cloud data frame in the preset database stored on the back end, so as to improve the accuracy of the displayed current tooth model, such that the point cloud data frame of the tooth may be continuously scanned, thereby guaranteeing the accuracy of the current tooth model visually displayed.

As mentioned above, since the generation of the reference tooth model and the generation and displaying of the current tooth model according to the preset tracking registering algorithm and the current point cloud data frame are performed in parallel, for example, the reference tooth model may be generated on the back end, the back end infuses the current point cloud data frame acquired each time into the point cloud data frames acquired historically to construct an infusion field, so as to acquire the reference tooth model with higher accuracy, and the front end rapidly acquires and displays the current tooth model based on the tracking registering technology. Without visually delaying the display of the tooth model, the reference tooth model with higher accuracy is switched to be displayed on the front end when necessary, so as to realize the completeness and accuracy of the acquired tooth model on the basis of ensuring that the tooth model may be displayed in real time according to the point cloud data frames.

In a case that acquisition of the point cloud data frame of the tooth is completed, it is determined that the displayed current tooth model is a target tooth model, that is, the target tooth model finally displayed is used as a complete tooth model; and in a case that the acquisition of the point cloud data frame of the tooth is not completed, the above step is repeated to acquire the complete tooth model. In the process of acquiring the tooth model, in a case that it is determined that all the point cloud data frames in the preset database do not meet the preset model updating condition, the current tooth model generated and displayed according to the preset tracking registering algorithm and the current point cloud data frame is used as the tooth model finally obtained in the current period.

In addition, it is to be noted that, in different application scenarios, the manner of determining the reference tooth model according to all the point cloud data frames is different. In the embodiments of the present disclosure, the manner of determining the reference tooth model according to all the point cloud data frames and space registering positions thereof may be obtained through existing technologies (e.g., a fusion method based on an octree voxel field), and is not described herein again.

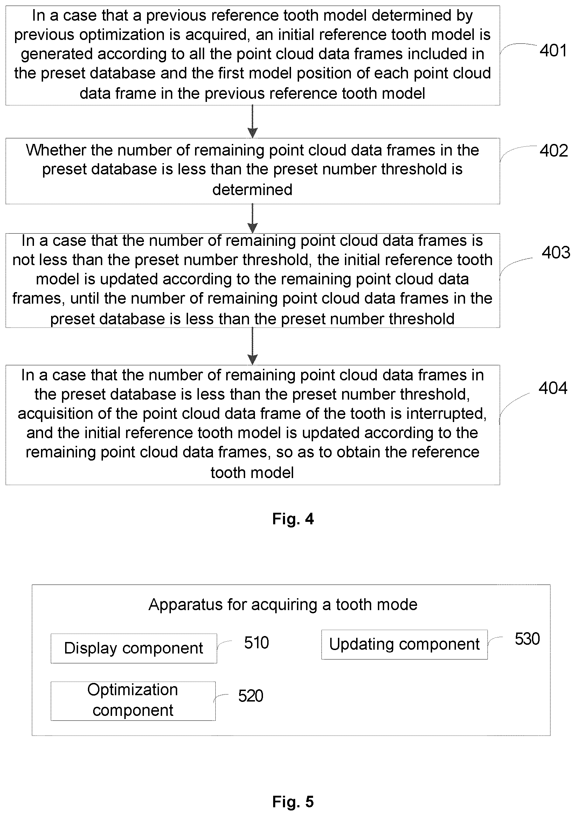

In some alternative embodiments, as shown in Fig. 4, determining the reference tooth model according to all the point cloud data frames includes the following steps.

At S401, in a case that a previous reference tooth model determined by previous optimization is acquired, an initial reference tooth model is generated according to all the point cloud data frames included in the preset database and the first model position of each point cloud data frame in the previous reference tooth model.

It may be understood that, in a case that the previous reference tooth model determined by the previous optimization is acquired, the initial reference tooth model is generated according to all the point cloud data frames included in the preset database and the first model position of each point cloud data frame in the previous reference tooth model.

In some embodiments of the present disclosure, in a case that the reference tooth model is constructed currently by the back end for the first time, all the point cloud data frames included in the preset database may be directly fused to obtain the initial reference tooth model.

At S402, whether the number of remaining point cloud data frames in the preset database is less than the preset number threshold is determined.

The preset number threshold may be calibrated based on experimental data.

At S403, in a case that the number of remaining point cloud data frames is not less than the preset number threshold, the initial reference tooth model is updated according to the remaining point cloud data frames, until the number of remaining point cloud data frames in the preset database is less than the preset number threshold.

At S404, in a case that the number of remaining point cloud data frames in the preset database is less than the preset number threshold, acquisition of the point cloud data frame of the tooth is interrupted, and the initial reference tooth model is updated according to the remaining point cloud data frames, so as to obtain the reference tooth model. When the initial reference tooth model is updated according to the remaining point cloud data frames to obtain the reference tooth model, the registering position on the initial reference tooth model may be determined for registering based on local overlap so as to quickly obtain the reference tooth model.

That is, in some embodiments of the present disclosure, since the scanning of the point cloud data frame by the front end is persistent, in order to ensure that the initial reference tooth model may include the acquired point cloud data frames as much as alternative, in the process of determining the reference tooth model according to all the point cloud data frames mentioned in the above embodiments, first, according to all the current point cloud data frames in the current database, the initial reference tooth model (the manner of generating the initial reference tooth model is referred to the above embodiments, and is not described herein again) is infused and generated based on the global optimization algorithm. In a case that the previous reference tooth model determined by the previous optimization is acquired, the initial reference tooth model is generated according to all the point cloud data frames included in the preset database and the first model position of each point cloud data frame in the previous reference tooth model.

Since the initial reference tooth model needs time to generate, there are still point cloud data frames scanned by the front end added in the database of the back end in the process of generating the initial reference tooth model, such that after the initial reference tooth model is generated, the number of remaining point cloud data frames that do not participate in the generation of the initial reference tooth model in the current back-end database is determined, and whether the number of remaining point cloud data frames is greater than a preset data threshold; in a case that the number of remaining point cloud data frames is not greater than a preset data threshold, the scanning process is interrupted, global optimization fusion is performed on the remaining point cloud data frames and the initial reference tooth model to obtain the updated current tooth model; and the updated current tooth model is used to replace the current tooth model of the front end, and in this case, whether all the teeth are scanned is determined, and in a case that all the teeth have been not fully been scanned a scanning acquisition process of the next period continues to enter.

Otherwise, in a case that the number of remaining point cloud data frames is greater than the preset data threshold, global optimization fusion is performed on the remaining point cloud data frames and the current initial reference tooth model to obtain the updated initial reference tooth model, and in this case, determination is continuously repeated; in a case that the number of remaining point cloud data frames is not greater than the preset data threshold, the scanning process of the front end is interrupted, global optimization fusion is performed on the remaining point cloud data frames and the initial reference tooth model to obtain the updated reference tooth model, and when the preset model updating condition is met, the reference tooth model finally obtained is used to replace the current tooth model of the front end. In this case, whether all the teeth are scanned is determined, and in a case that all the teeth have been not fully been scanned, the scanning acquisition process of the next period continues to enter.

To sum up, according to the method for acquiring a tooth model provided in the embodiments of the present disclosure, in response to the acquired current point cloud data frame of the tooth and according to the preset tracking registering algorithm and the current point cloud data frame, the current tooth model is generated and displayed; then, the current point cloud data frame is stored into the preset database, and according to all the point cloud data frames included in the preset database, whether the preset model updating condition is met is determined; and in a case that the preset model updating condition is met, the reference tooth model is determined according to all the point cloud data frames, and the current tooth model is updated according to the reference tooth model. Therefore, the generation and display of the tooth model and the global optimization of the tooth model are performed in parallel, and the tooth model is updated at the appropriate time according to results after global optimization, such that the problem that the point cloud data frames of the teeth cannot be continuously acquired due to large errors of the tooth model to affect the acquisition completeness of the tooth model is avoided, and the completeness and accuracy of the acquired tooth model are realized on the basis of ensuring that the tooth model may be displayed in real time according to the point cloud data frames.

In order to implement the above embodiments, the present disclosure further provides an apparatus for acquiring a tooth model.

Fig. 5 is a schematic structural diagram of an apparatus for acquiring a tooth model according to embodiments of the present disclosure. The apparatus may be implemented by using software and/or hardware, and may generally be integrated in an electronic device for acquiring a tooth model. As shown in Fig. 5, the apparatus includes: a display component 510, an optimization component 520, and an updating component 530.

The display component 510 is configured to, in response to an acquired current point cloud data frame of a tooth and according to a preset tracking registering algorithm and the current point cloud data frame, generate and display a current tooth model.

The optimization component 520 is configured to store the current point cloud data frame into a preset database, and according to all point cloud data frames comprised in the preset database, determine whether a preset model updating condition is met.

The updating component 530 is configured to, when the preset model updating condition is met, determine a reference tooth model according to all the point cloud data frames, and update the current tooth model according to the reference tooth model.

The apparatus for acquiring a tooth model provided in the embodiments of the present disclosure may execute the method for acquiring a tooth model provided in any embodiment of the present disclosure, and thus has corresponding functional components for performing the method and corresponding beneficial effects.

In some alternative embodiments, the apparatus further includes a model determination component, configured to perform the following operation.

When acquisition of the point cloud data frame of the tooth in completed, it is determined that the displayed current tooth model is a target tooth model.

In some alternative embodiments, the display component 510 is specifically configured of alternative to perform the following operations.
when the current point cloud data frame is the first point cloud data frame acquired, the current tooth model is constructed and displayed according to the current point cloud data frame.

When the current point cloud data frame is not the first point cloud data frame acquired, a historical tooth model recently displayed is acquired.

The current point cloud data frame is registered on the historical tooth model to acquire and display the current tooth model.

In some alternative embodiments, the optimization component 520 is specifically configured to perform the following operation.

The number of current frames of all the point cloud data frames included in the preset database is counted, and in a case that the number of current frames is greater than a preset number threshold, it is determined that the preset model updating condition is met.

In some alternative embodiments, the optimization component 520 is specifically configured to perform the following operations.

According to the current all point cloud data frames included in the preset database, a first model position of each point cloud data frame is determined.

A second model position of each point cloud data frame in the displayed current tooth model is determined.

A position error of each point cloud data frame is calculated according to the first model position and the second model position.

According to the position error, whether the preset model updating condition is met is determined.

In some alternative embodiments, the optimization component 520 is specifically configured to perform the following operations.

An error mean of all position errors is calculated.

Whether the error mean is greater than a preset average error threshold is determined, and in a case that the error mean is greater than the preset average error threshold, it is determined that the preset model updating condition is met.

In some alternative embodiments, the optimization component 520 is specifically configured to perform the following operations.

A maximum position error among all the position errors is determined.

Whether the maximum position error is greater than a preset maximum error threshold is determined, and in a case that the maximum position error is greater than the maximum error threshold, it is determined that the preset model updating condition is met.

In some alternative embodiments, the updating component 530 is specifically configured to perform the following operations.

In a case that a previous reference tooth model determined by previous optimization is acquired, an initial reference tooth model is generated according to all the point cloud data frames included in the preset database and the first model position of each point cloud data frame in the previous reference tooth model.

Whether the number of remaining point cloud data frames in the preset database is less than the preset number threshold is determined.

When the number of remaining point cloud data frames is not less than the preset number threshold, the initial reference tooth model is updated according to the remaining point cloud data frames, until the number of remaining point cloud data frames in the preset database is less than the preset number threshold.

When the number of remaining point cloud data frames in the preset database is less than the preset number threshold, acquisition of the point cloud data frame of the tooth is interrupted, and the initial reference tooth model is updated according to the remaining point cloud data frames, so as to obtain the reference tooth model.

In some alternative embodiments, the updating component 530 is specifically configured to perform the following operation.

Whether the acquisition of the point cloud data frame of the tooth is completed is determined, and when the acquisition of the point cloud data frame of the tooth is not completed, the current point cloud data frame of the tooth is continuously acquired.

In order to implement the above embodiments, the present disclosure further provides a computer program product, including a computer program/instruction. The computer program/instruction, when being executed by a processor, implements the method for acquiring a tooth model in the above embodiments.

The embodiments of the present disclosure further provide a computer storage medium. The computer storage medium may store a program. The program, when being executed, may implement part or all steps in each implementation of the method for acquiring a tooth model.

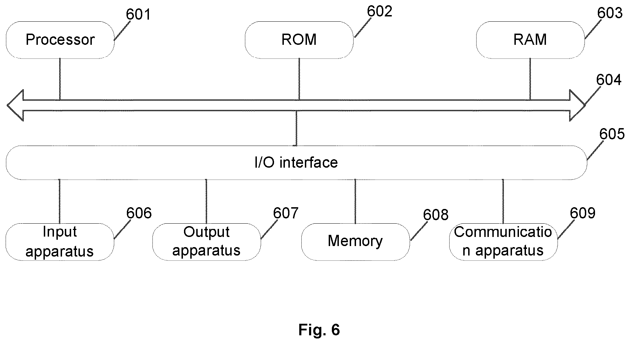

Fig. 6 is a schematic structural diagram of an electronic device according to embodiments of the present disclosure.

Specifically referring to Fig. 6 below, the schematic structural diagram suitable for implementing the electronic device 600 in the embodiments of the present disclosure is shown. The electronic device 600 in the embodiments of the present disclosure may include, but is not limited to, mobile terminals such as cell phones, notebook computers, digital broadcast receivers, Personal Digital Assistant (PDA), tablet computers (PADs), Portable Multimedia Players (PMPs), vehicle terminals (e.g., vehicle navigation terminals), and the like, as well as fixed terminals such as digital TVs, desktop computers, and the like. The electronic device shown in Fig. 6 is only an example, and should not impose any limitations on the functionality and scope of use of embodiments of the present disclosure.

As shown in Fig. 6, the electronic device 600 may include a processor 601 (e.g., central processing unit, graphics processing unit, or the like), which may perform various appropriate actions and processing operations according to a program stored in a Read-Only Memory (ROM) 602 or a computer program loaded from a memory 608 into a Random Access Memory (RAM) 603. In the RAM 603, various programs and data required for the operation of the electronic device 600 may also be stored. The processor 601, the ROM 602, and the RAM 603 are connected to each other via a bus 604. An Input/Output (I/O) interface 605 is also connected to the bus 604.

Generally, the following apparatuses may be connected to the I/O interface 605: an input apparatus 606 including, for example, a touch screen, a touch pad, a keyboard, a mouse, a camera, a microphone, an accelerometer, a gyroscope, and the like; an output apparatus 607 including, for example, a Liquid Crystal Display (LCD), a loudspeaker, a vibrator, and the like; a memory 608 including, for example, a magnetic tape, a hard disk, and the like; and a communication apparatus 609. The communication apparatus 609 may allow the electronic device 600 to perform wireless or wire communication with other devices, so as to exchange data. Although Fig. 6 shows the electronic device 600 having various apparatuses, it should be understood that, it is not required to implement or have all of the shown apparatuses. More or fewer apparatuses may alternatively be implemented or possessed.

In some embodiments, the process described above with reference to a flowchart may be implemented as a computer software program according to the disclosed embodiments of the present disclosure. For example, the disclosed embodiments of the present disclosure include a computer program product including a computer program carried on a non-transient computer-readable medium, and the computer program includes a program code for executing the method shown in the flowchart. In such an embodiment, the computer program may be downloaded and installed from the network through the communication apparatus 609, or installed from the memory 608, or installed from the ROM 602. When the computer program is executed by the processor 601, the above functions defined in the method for acquiring a tooth model in the embodiments of the present disclosure are executed.

It is to be noted that, the computer-readable medium shown in the present disclosure may be a computer-readable signal medium or a computer-readable storage medium or any combination thereof. The computer-readable storage medium, for example, may be, but not limited to, an electrical, magnetic, optical, electromagnetic, infrared, or semiconductor system, apparatus or device, or a combination of any of the above. More specific examples of the computer-readable storage medium may include, but are not limited to, an electrical connection member including one or more wires, a portable computer disk, a hard disk, an RAM, an ROM, an Erasable Programmable Read-Only Memory (EPROM), a flash memory, optical fiber, a portable Compact Disc Read-Only Memory (CD-ROM), an optical storage device, a magnetic storage device, or any appropriate combination thereof. In the present disclosure, the computer-readable storage medium may be any tangible medium that includes or stores a program. The program may be used by or in combination with an instruction execution system, an apparatus, or a device. In the present disclosure, the computer-readable signal medium may include a data signal that is propagated in a base band or propagated as a part of a carrier wave, which carries a computer-readable program code therein. The propagated data signal may adopt a plurality of forms including, but not limited to, an electromagnetic signal, an optical signal, or any suitable combination of the above. The computer-readable signal medium may also be any computer-readable medium other than the computer-readable storage medium. The computer-readable signal medium may send, propagate or transmit the program that is used by or in combination with the instruction execution system, the apparatus, or the device. The program code in the computer-readable medium may be transmitted with any proper medium, including, but not limited to, a wire, an optical cable, Radio Frequency (RF), etc., or any proper combination thereof.

In some implementations, a client or a server may communicate by using any currently known or future developed network protocol such as Hyper Text Transfer Protocol (HTTP) and may be interconnected with digital data communications (for example, communication networks) in any form or medium. Examples of a communication network include an LAN, a WAN, an inter-network (for example, the Internet), and an end-to-end network (for example, an ad hoc end-to-end network), as well as any currently known or future developed networks.

The computer-readable medium may be included in the electronic device, or may also be present separately and not fitted into the electronic device.

The computer-readable medium carries one or more programs. When the one or more programs are executed by the electronic device, the electronic device is enabled to perform the following operations. In response to an acquired current point cloud data frame of a tooth and according to a preset tracking registering algorithm and the current point cloud data frame, a current tooth model is generated and displayed; then, the current point cloud data frame is stored into a preset database, and according to all point cloud data frames included in the preset database, whether a preset model updating condition is met is determined; and in a case that the preset model updating condition is met, a reference tooth model is determined according to all the point cloud data frames, and the current tooth model is updated according to the reference tooth model. Therefore, the generation and display of the tooth model and the global optimization of the tooth model are performed in parallel, and the tooth model is updated at the appropriate time according to results after global optimization, such that the problem that the point cloud data frames of the teeth cannot be continuously acquired due to large errors of the tooth model to affect the acquisition completeness of the tooth model is avoided, and the completeness and accuracy of the acquired tooth model are realized on the basis of ensuring that the tooth model may be displayed in real time according to the point cloud data frames.

The electronic device may compile computer program code configured to execute operations in the present disclosure based on one or more programming languages or a combination thereof. The programming languages include a programming language facing an object, such as Java, Smalltalk, and C++, and further include a conventional procedural programming language, such as "C" language, or similar programming languages. The program code may be completely executed in a computer of a user or partially executed in the computer of the user, executed as an independent software package, executed partially in the computer of the user and partially in a remote computer, or executed completely in the remote server or a server. In a situation involving the remote computer, the remote computer may be connected to the user computer by using any type of network including a local area network (LAN) or a wide area network (WAN), or may be connected to an external computer (for example, connected to the external computer through the Internet by using an Internet service provider).

The flowcharts and block diagrams in the drawings illustrate probably implemented system architectures, functions, and operations of the system, method, and computer program product according to various embodiments of the present disclosure. On this aspect, each block in the flowcharts or block diagrams may represent a component, a program segment, or a portion of a code, which includes one or more executable instructions for implementing the specified logic functions. It is also to be noted that, in certain alternative implementations, the functions marked in the blocks may also be realized in a sequence different from those marked in the drawings. For example, two blocks shown in succession may, in fact, be executed substantially in parallel, and sometimes in a reverse sequence, depending upon the functionality involved. It is also to be noted that each block of the block diagrams and/or flowcharts and combinations of blocks in the block diagrams and/or flowcharts may be implemented by dedicated hardware-based systems that execute the specified functions or operations, or may be implemented in a combination of dedicated hardware and computer instructions.

The units described in the embodiments of the present disclosure may be implemented by means of software or hardware. The name of the unit does not in some cases constitute a limitation of the unit itself.

The functions described above herein may be executed, at least in part, by one or more hardware logic components. For example, without limitation, exemplary types of hardware logic components that may be used include: a Field Programmable Gate Array (FPGA), an Application-Specific Integrated Circuit (ASIC), an Application-Specific Standard Product (ASSP), systems-on-chip (SOC), a Complex Programmable Logic Device (CPLD), and the like.

In the context of the present disclosure, a machine-readable medium may be a tangible medium, which may include or store a program for being used by an instruction execution system, device, or apparatus or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, device, or apparatus, or any foregoing suitable combinations. More specific examples of the machine-readable storage medium may include electrical connections based on one or more wires, a portable computer disk, a hard disk, an RAM, an ROM, an Erasable Programmable Read-Only Memory (EPROM or flash memory), an optical fiber, a portable Compact Disk Read-Only Memory (CD-ROM), an optical storage device, a magnetic storage device, or any above suitable combinations.

It is to be noted that, relational terms such as "first" and "second" are used merely to distinguish one entity or operation from another entity or operation herein, and do not necessarily require or imply the existence of any such actual relationship or order between these entities or operations. Furthermore, terms "comprise", "include" or any other variants are intended to encompass non-exclusive inclusion, such that a process, a method, an article or a device including a series of elements not only include those elements, but also includes other elements not listed explicitly or includes intrinsic elements for the process, the method, the article, or the device. Without any further limitation, an element defined by the phrase "comprising one" does not exclude existence of other same elements in the process, the method, the article, or the device that includes the elements.

The above is merely the specific implementation of the present disclosure, to make those skilled in the art understand or implement the present disclosure. It is apparent that the technical personnel in the art will make many modifications to these embodiments, the general principles defined in the present disclosure may be achieved in the other embodiments without departing from the spirit or essential attributes of the present disclosure. Therefore, the present disclosure will not be limited to the embodiments shown herein, but to conform to the maximum extent of principles and new features that are disclosed herein.

According to the method for acquiring a tooth model provided in the present disclosure, the generation and display of the tooth model and the global optimization of the tooth model are performed in parallel, and the tooth model is updated at the appropriate time according to results after global optimization, such that the problem that the point cloud data frames of the teeth cannot be continuously acquired due to large errors of the tooth model to affect the acquisition completeness of the tooth model is avoided, and the completeness and accuracy of the acquired tooth model are realized on the basis of ensuring that the tooth model may be displayed in real time according to the point cloud data frames. Therefore, the method for acquiring a tooth model has strong industrial applicability.

## Claims

1. A method for acquiring a tooth model, comprising the following steps:
in response to an acquired current point cloud data frame of a tooth, generating and displaying a current tooth model according to a preset tracking registering algorithm and the current point cloud data frame;
storing the current point cloud data frame into a preset database, and determining whether a preset model updating condition is met according to all point cloud data frames comprised in the preset database; and
in a case that the preset model updating condition is met, determining a reference tooth model according to all the point cloud data frames, and updating the current tooth model according to the reference tooth model.

2. The method as claimed in claim 1, further comprising:
in a case that acquisition of the point cloud data frame of the tooth is completed, determining that the displayed current tooth model is a target tooth model.

3. The method as claimed in claim 1 or 2, wherein the generating and displaying the current tooth model according to the preset tracking registering algorithm and the current point cloud data frame comprises:
in a case that the current point cloud data frame is the first point cloud data frame acquired, constructing and displaying the current tooth model according to the current point cloud data frame;
in a case that the current point cloud data frame is not the first point cloud data frame acquired, acquiring a historical tooth model recently displayed; and
registering the current point cloud data frame on the historical tooth model to acquire and display the current tooth model.

4. The method as claimed in any one of claims 1 to 3, wherein the determining whether the preset model updating condition is met according to all the point cloud data frames comprised in the preset database comprises:
counting the number of current frames of all the point cloud data frames comprised in the preset database, and in a case that the number of current frames is greater than a preset number threshold, determining that the preset model updating condition is met.

5. The method as claimed in any one of claims 1 to 4, wherein the determining whether the preset model updating condition is met according to all the point cloud data frames comprised in the preset database, comprises:
according to the current all point cloud data frames comprised in the preset database, determining a first model position of each point cloud data frame;
determining a second model position of each point cloud data frame in the displayed current tooth model;
calculating a position error of each point cloud data frame according to the first model position and the second model position; and
according to the position error, determining whether the preset model updating condition is met.

6. The method as claimed in any one of claims 1 to 5, wherein the determining whether the preset model updating condition is met according to the position error comprises:
calculating an error mean of all the position errors; and
determining whether the error mean is greater than a preset average error threshold, and in a case that the error mean is greater than the preset average error threshold, determining that the preset model updating condition is met.

7. The method as claimed in any one of claims 1 to 6, wherein the determining whether the preset model updating condition is met according to the position error comprises:
determining a maximum position error among all the position errors; and
determining whether the maximum position error is greater than a preset maximum error threshold, and in a case that the maximum position error is greater than the maximum error threshold, determining that the preset model updating condition is met.

8. The method as claimed in any one of claims 1 to 7, wherein the determining the reference tooth model according to all the point cloud data frames comprises:
in a case that a previous reference tooth model determined by previous optimization is acquired, generating an initial reference tooth model according to all the point cloud data frames comprised in the preset database and the first model position of each point cloud data frame in the previous reference tooth model;
determining whether the number of remaining point cloud data frames in the preset database is less than the preset number threshold;
in a case that the number of remaining point cloud data frames is not less than the preset number threshold, updating the initial reference tooth model according to the remaining point cloud data frames, until the number of remaining point cloud data frames in the preset database is less than the preset number threshold; and
in a case that the number of remaining point cloud data frames in the preset database is less than the preset number threshold, interrupting acquisition of the point cloud data frame of the tooth, and updating the initial reference tooth model according to the remaining point cloud data frames, so as to obtain the reference tooth model.

9. The method as claimed in any one of claims 1 to 8, further comprising:
determining whether the acquisition of the point cloud data frame of the tooth is completed, and in a case that the acquisition of the point cloud data frame of the tooth is not completed, continuously acquiring the current point cloud data frame of the tooth.

10. An apparatus for acquiring a tooth model, comprising:
a display component, configured to, in response to an acquired current point cloud data frame of a tooth and according to a preset tracking registering algorithm and the current point cloud data frame, generate and display a current tooth model;
an optimization component, configured to store the current point cloud data frame into a preset database, and according to all point cloud data frames comprised in the preset database, determine whether a preset model updating condition is met; and
an updating component, configured to, when the preset model updating condition is met, determine a reference tooth model according to all the point cloud data frames, and update the current tooth model according to the reference tooth model.

11. An electronic device, comprising:
a processor; and
a memory configured to store an instruction that is executable by the processor, wherein
the processor is configured to read the executable instruction from the memory, and execute the executable instruction to implement the method for acquiring a tooth model as claimed in any one of claims 1 to 9.

12. A computer-readable storage medium, storing a computer program, wherein the computer program is configured to execute the method for acquiring a tooth model as claimed in any one of claims 1 to 9.
